# EUROPEAN PATENT APPLICATION

(11) **EP 4 546 705 A1**
(43) Date of publication of application: **30.04.2025**
(21) Application number: 23205928.7
(22) Date of filing: 25.10.2023
(51) Int. Cl.: H04L 9/08, G09C 5/00

(54) **SYSTEM AND METHOD FOR PROVIDING KEYLESS ENCRYPTION AND DECRYPTION**

(71) Applicant: THALES DIS CPL USA, INC., Austin, TX 78759 (US)
(72) Inventor: RAI, Amit, Uttar Pradesh 250110 (IN); SINGH, Anshul, Uttarakhand 249402 (IN); SINGAL, Viney, Haryana 127021 (IN); SRIVASTAVA, Mitali, Uttar Pradesh 226016 (IN)
(74) Representative: Lotaut, Yacine Diaw

(57) **Abstract**

A system (200) and method (400) for keyless cryptographic operations can include one or more processors (204) and memory (202) operatively coupled to the one or more processors, where the memory includes computer instructions causing the one or more processors to perform certain operations. The operations can include generating (402) a magic value at runtime of the one or more processors to perform a cryptographic operation by creating (404) a random index for a first array (302) from a second array (304), wherein the second array comprises a pre-defined index of methods (306b, 308b, etc) computing static fields of the system, algorithmically deriving (406) the magic value from the second array on the basis of values in the first array, and using (408) the magic value for the cryptographic operation without ever storing the magic value or a portion thereof in memory.

## Description

### TECHNICAL FIELD

The present embodiments relate generally to systems and methods of obfuscating cryptographic material such as plaintext keys. More particularly, the system and method relate to providing a keyless encryption and decryption system less susceptible to hacking.

### BACKGROUND

Hacking vulnerabilities are discovered more often today. Notably, cryptographic material, such as passwords, encryption keys, authentication information, and the like, may be cryptographically protected (e.g., encrypted) while being stored in non-volatile memory, for example, when the cryptographic material is not being used. To use the cryptographic material, the cryptographic material may be retrieved from the non-volatile memory, decrypted, and then stored in a volatile memory (e.g., a buffer, a cache, random access memory (RAM), etc.) in plaintext (e.g., unencrypted). The cryptographic material in the volatile memory may be used to perform cryptographic operations, such as authentication, encryption, authorization, signature generation, signature verification, etc. However, the plaintext cryptographic material stored in the volatile memory continues to represent a vulnerability. In this regard, a malicious user (e.g., hacker) may use various tools to obtain the plaintext cryptographic material stored in the volatile memory. For example, the malicious user may gain access to a host and use tools to scan the volatile memory to obtain the plaintext cryptographic material. In another example, the malicious user may scan memory dumps and/or core dump files to retrieve the plaintext cryptographic material. In yet a further example, the malicious user may perform a cold boot attack to obtain the plaintext cryptographic material. Once the plaintext cryptographic material is obtained, the system may be compromised and the malicious user may obtain confidential and/or other secret information.

One solution to this issue as illustrated by the system 100 can involve using calls to a public key 104 using a third party tool 108 which is used for cryptographic operations 106 for encrypting and decrypting confidential data 110 using a memory 102. This system requires a third party and network connectivity to perform the cryptographic operation.

Another existing system divides the key bytes into chunks and stores the chunks at different indexes in memory. More particularly, such system as illustrated in US Patent No. 11,604,740 published on March 14, 2023 to Capital One Service, LLC, (hereinafter "Capital One") uses a random location in an obfuscation buffer that may be selected for each byte of the plaintext cryptographic material. The location of each byte of the plaintext cryptographic material may be stored in a position tracking buffer. To recover the scrambled plaintext cryptographic material, the location of each byte of the plaintext cryptographic material may be read from the position tracking buffer. Each byte of the plaintext cryptographic material may then be read from the obfuscation buffer and written to a temporary buffer. When each byte of the plaintext cryptographic material is recovered, the plaintext cryptographic material may be used to perform one or more cryptographic operations. The scrambling techniques reduce the likelihood of a malicious user recovering plaintext cryptographic material while stored in memory. Unfortunately, this system does not completely eliminate the vulnerability and still leaves some vulnerabilities intact since reverse engineering the system will still allow an attacker to retrieve the pattern from the obfuscation buffer required to decrypt the data.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, a system for keyless encryption and decryption can include one or more processors and memory operatively coupled to the one or more processors, where the memory includes computer instructions which when executed by the one or more processors causes the one or more processors to perform certain operations. The operations can include generating a magic value at runtime of the one or more processors to perform a cryptographic operation by creating a random index for a first array from a second array, where the second array comprises a pre-defined index of methods computing static fields of the system, algorithmically deriving the magic value from the second array on the basis of values in the first array, and using the magic value for the cryptographic operation.

In some embodiments, the magic value is not stored in non-volatile memory.

In some embodiments, the system does not require network connectivity to perform the cryptographic operation.

In some embodiments, the pre-defined index of methods computing static fields comprises one or more among a CPU Identifier and a process ID.

In some embodiments, pseudo code is used for generating the magic value.

In some embodiments, the magic value is gone once the cryptographic operation is complete.

In some embodiments, the system generates the magic value again at runtime to perform a decryption function without storing the magic value in memory.

In some embodiments, the system is incorporated as part of a development, security, and operations (devsecops) tool that automates integration of security into software development with an extra layer of protection.

In some embodiments, the cryptographic operation and magic value is only valid for a period coextensive with a process associated with the cryptographic operation. In some embodiments, the process is a docker and the magic value is only valid during the period coextensive during operation of the docker.

In some embodiments, system for keyless encryption and decryption can include one or more processors and memory operatively coupled to the one or more processors, where the memory includes computer instructions which when executed by the one or more processors causes the one or more processors to perform certain operations. The operations can include generating a magic value at runtime of the one or more processors to perform a cryptographic operation by creating a random index for a first array from a second array, wherein the second array comprises a pre-defined index of methods computing static fields of the system, algorithmically deriving the magic value from the second array on the basis of values in the first array, using the magic value for the cryptographic operation, and where the magic value is gone once the cryptographic operation is complete.

In some embodiments, pseudo code is used for generating the magic value. In some embodiments, the system generates the magic value again at runtime to perform a decryption function without storing the magic value in memory.

In some embodiments, a method for keyless encryption and decryption at a client device having one or more processors and memory operatively coupled to the one or more processors, where the memory includes computer instructions which when executed by the one or more processors causes the one or more processors to perform certain operations. The operations can include generating a magic value at runtime of the one or more processors to perform a cryptographic operation at the client device by creating a random index for a first array from a second array, wherein the second array comprises a pre-defined index of methods computing static fields of the system, algorithmically deriving the magic value from the second array on the basis of values in the first array, and using the magic value for the cryptographic operation.

In some embodiments, the magic value is not stored in non-volatile memory and wherein the client device does not require network connectivity to perform the cryptographic operation.

In some embodiments, the pre-defined index of methods computing static fields includes one or more among a CPU Identifier and a process ID.

In some embodiments, the magic value is gone once the cryptographic operation is complete.

In some embodiments the method generates the magic value again at runtime to perform a decryption function without storing the magic value in memory.

In some embodiments, the cryptographic operation and magic value is only valid for a period coextensive with a process associated with the cryptographic operation. In some embodiments, the process is a docker and the magic value is only valid during the period coextensive during operation of the docker.

### BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.

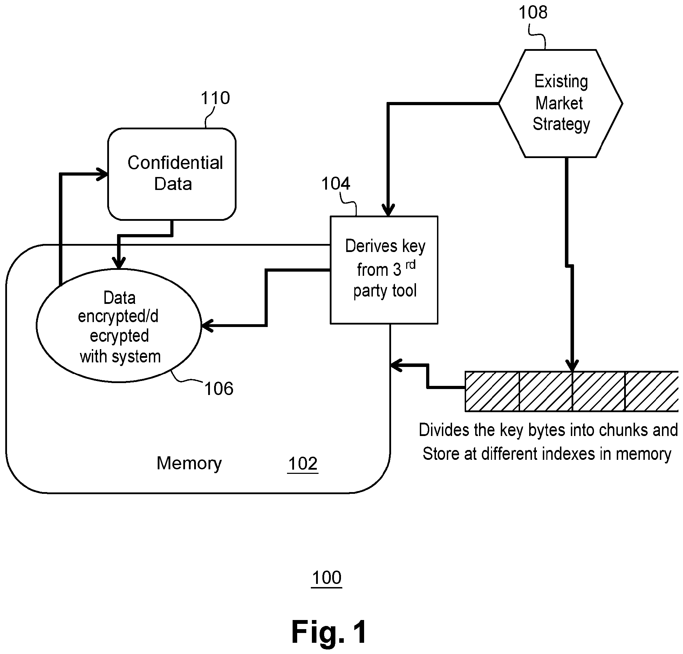

**FIG. 1** illustrates a flow diagram of an existing cryptographic process;
**FIG. 2** illustrates a block diagram of system components and a corresponding flow of a keyless cryptographic process in accordance with the embodiments;
**FIG. 3** illustrates the arrays used with the system of FIG. 2 in accordance with the embodiments; and
**FIG. 4** illustrates a flow chart of a method of a keyless cryptographic process in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of apparatuses and methods consistent with aspects related to the embodiments as recited in the appended claims.

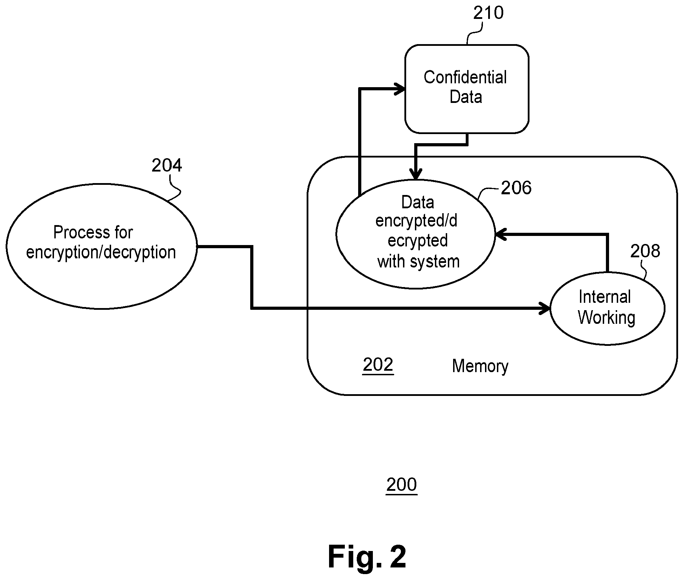

In some embodiments with reference to the system 200 of FIG. 2, the systems and methods herein provide for keyless encryption and decryption that may include one or more processors and memory 202 operatively coupled to the one or more processors, where the memory includes computer instructions 208 which when executed by the one or more processors causes the one or more processors to perform certain operations in response to a request for cryptographic operation 204 resulting in confidential data 210 being encrypted or decrypted in accordance with the embodiments.

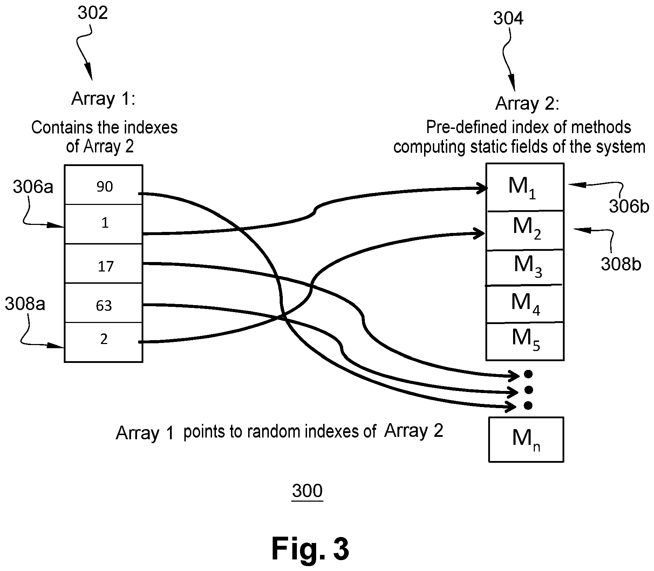

With further reference to the arrays 300 of FIG. 3, the operations of the method can include generating a magic value at runtime of the one or more processors to perform a cryptographic operation 206 by creating a random index for a first array 302 from a second array 304, where the second array 304 comprises a pre-defined index of methods (306b, 308b, etc.) computing static fields of the system, algorithmically deriving the magic value from the second array 304 on the basis of values in the first array 302, and using the magic value for the cryptographic operation.

For example, the second item (306a) in the first array 302 has a value that points to the first item (306b) in the second array 304 that has the first method or M1. In another example, the 5^{th} or last item (308a) in the first array 302 has a value that points to the second item (308b) in the second array 304 that has the second method or M2. Again, the array 304 has a pre-defined index of methods (M1 through Mn as shown) that computes static fields of the system. The methods collectively help to compute the magic value used for encryption, decryption or other cryptographic functions in accordance with the embodiments. Note that the technique is hardware-independent and that the magic value generation depends on a combination of both hardware (in terms of hardware identities) and software.

In some embodiments, the magic value is not stored in non-volatile memory.

In some embodiments, the system does not require network connectivity to perform the cryptographic operation. This is in contrast to the Capital One patent where they import or export their keys from the network and then obfuscate key material in memory. Thus, the Capital One patent requires network connectivity to function properly.

In the embodiments herein, there is no key imported from the network since the system generates the magic value using a combination of hardware and software configurations of the client device (e.g., docker ID, process ID, memory addresses, etc.). To reiterate the difference between Capital One and the current embodiments, the Capital One patent saves their key bytes in memory in contrast to the current system that regenerates a magic value every time there is a request for a cryptographic function to ensure that no key bytes are saved inside any memory in the client device.

In some embodiments, the pre-defined index of methods computing static fields comprises one or more among a CPU Identifier and a process ID.

In some embodiments, pseudo code is used for generating the magic value.

In some embodiments, the magic value is gone once the cryptographic operation is complete.

In some embodiments, the system generates the magic value again at runtime to perform a decryption function without storing the magic value in memory.

In some embodiments, the system is incorporated as part of a development, security, and operations (devsecops) tool that automates integration of security into software development with an extra layer of protection.

In some embodiments, the cryptographic operation and magic value is only valid for a period coextensive with a process associated with the cryptographic operation. In some embodiments, the process is a docker and the magic value is only valid during the period coextensive during operation of the docker.

In some embodiments, system for keyless cryptographic functions can include the use of one or more processors which executing computer instructions causing the one or more processors to perform certain operations. The operations can include generating a magic value at runtime of the one or more processors to perform a cryptographic operation by creating a random index for a first array from a second array, where the second array can include a pre-defined index of methods computing static fields of the system, algorithmically deriving the magic value from the second array on the basis of values in the first array, using the magic value for the cryptographic operation, and where the magic value is gone once the cryptographic operation is complete.

The complexity of this keyless solution depends on the length of the array used in the method where the magic value is generated every time (internally) to the client device without any dependency on the network. Again, the Capital One patent obfuscates the key material, but does necessarily store the key in chunks in memory still allowing a hacker to regenerate the key. In this regard, the Capital One patent has key information persisting in memory enabling the possible retrieval and regeneration of the key from a context memory dump. The magic value in the current embodiments, in contrast, is not saved and therefore is simply not available or retrievable from a memory context dump.

In some embodiments, pseudo code is used for generating the magic value. In some embodiments, the system generates the magic value again at runtime to perform a decryption function without storing the magic value in memory.

The system in the Capital One patent imports the key and divides it into chunks, saves it into different indexes of memory, and uses these indexes to reuse the key. In the current embodiments, no key is imported and an array of indexes containing a random index of the method array provides the input seed to regenerate the magic value.

The system in the Capital One patent uses real key bytes on their index, whereas the current embodiments instead has method information on an index that generates different seed on a different system or memory context.

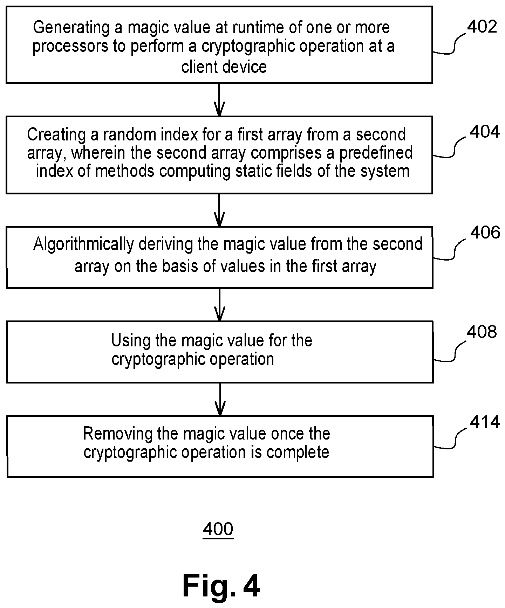

In some embodiments with reference to the flow chart of FIG. 4, a method 400 for keyless encryption and decryption at a client device that performs certain operations. The operations can include the step 402 of generating a magic value at runtime of the one or more processors to perform a cryptographic operation at the client device by creating at step 404 a random index for a first array from a second array, where the second array comprises a pre-defined index of methods computing static fields of the system. The method 400 can further include at step 406 of algorithmically deriving the magic value from the second array on the basis of values in the first array, and using the magic value for the cryptographic operation at step 408.

In some embodiments, the magic value is not stored in non-volatile memory and wherein the client device does not require network connectivity to perform the cryptographic operation.

In some embodiments, the pre-defined index of methods computing static fields includes one or more among a CPU Identifier and a process ID.

In some embodiments, the magic value is gone or removed once the cryptographic operation is complete as shown at step 414.

In some embodiments the method generates the magic value again at runtime to perform a decryption function without storing the magic value in memory.

In some embodiments, the cryptographic operation and magic value is only valid for a period coextensive with a process associated with the cryptographic operation. In some embodiments, the process is a docker and the magic value is only valid during the period coextensive during operation of the docker.

Although the system of the Capital One patent makes it more difficult for a hacker obtain a key, a hacker can nevertheless still recover the key from a memory dump by knowing the patterns of saving of the chunks of the key bytes since the Capital One system divides the key bytes into chunks based on an index. In contrast, there are no chunks of key bytes stored in memory in the current embodiments and therefore no magic value to recover at all from a core memory dump. The current embodiments only store an index that is only useful inside the client device and for a particular memory context only. The information is ephemeral and useless outside the context of the client device and outside the context of the process that requested the cryptographic function.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (200) for keyless encryption and decryption, comprising:
one or more processors (204) and memory (202) operatively coupled to the one or more processors, wherein the memory includes computer instructions which when executed by the one or more processors causes the one or more processors to perform the operations of:
generating (402) a magic value at runtime of the one or more processors to perform a cryptographic operation by:
creating (404) a random index for a first array (302) from a second array (304), wherein the second array comprises a pre-defined index of methods (306b, 308b, etc.) computing static fields of the system;
algorithmically deriving (406) the magic value from the second array on the basis of values in the first array; and
using (408) the magic value for the cryptographic operation.

2. The system of claim 1, wherein the magic value nor a portion thereof is ever stored in memory.

3. The system of claim 1, wherein the system does not require network connectivity to perform the cryptographic operation.

4. The system of claim 1, wherein the pre-defined index of methods computing static fields comprises one or more among a CPU Identifier and a process ID.

5. The system of claim 1, wherein pseudo code is used for generating the magic value.

6. The system of claim 1, wherein the magic value disappears (414) once the cryptographic operation is complete.

7. The system of claim 1, wherein the system generates the magic value again at runtime to perform a decryption function without storing the magic value in any memory.

8. The system of claim 1, wherein the system is incorporated as part of a development, security, and operations (devsecops) tool that automates integration of security into software development with an extra layer of protection.

9. The system of claim 1, wherein cryptographic operation and magic value is only valid for a period coextensive with a process associated with the cryptographic operation.

10. The system of claim 9, wherein the process is a docker and the magic value is only valid during the period coextensive during operation of the docker.

11. A system (200) for keyless encryption and decryption, comprising:
a first array (302);
a second array (304), wherein the second array comprises a pre-defined index of methods (306a, 306b, etc.) computing static fields of the system;
one or more processors (204) and memory (202) operatively coupled to the one or more processors, wherein the memory includes computer instructions which when executed by the one or more processors causes the one or more processors to perform the operations of:
generating (402) a magic value at runtime of the one or more processors to perform a cryptographic operation by:
creating (404) a random index for the first array from the second array;
algorithmically deriving (406) the magic value from the second array on the basis of values in the first array;
using (408) the magic value for the cryptographic operation; and
wherein the magic value disappears (414) once the cryptographic operation is complete.

12. The system of claim 11, wherein pseudo code is used for generating the magic value.

13. The system of claim 11, wherein the system generates the magic value again at runtime to perform a decryption function without storing the magic value in memory.

14. A method (400) for keyless encryption and decryption at a client device having one or more processors (204) and memory (202) operatively coupled to the one or more processors, wherein the memory includes computer instructions which when executed by the one or more processors causes the one or more processors to perform the operations of:
generating (402) a magic value at runtime of the one or more processors to perform a cryptographic operation at the client device by:
creating (404) a random index for a first array (302) from a second array (304), wherein the second array comprises a pre-defined index (306b, 308b, etc.) of methods computing static fields of the client device;
algorithmically deriving (406) the magic value from the second array on the basis of values in the first array; and
using (408) the magic value for the cryptographic operation.

15. The method of claim 14, wherein the magic value is not stored in non-volatile memory and wherein the client device does not require network connectivity to perform the cryptographic operation.

16. The method of claim 14, wherein the pre-defined index of methods computing static fields comprises one or more among a CPU Identifier and a process ID of the client device.

17. The method of claim 14, wherein the magic value disappears (414) once the cryptographic operation is complete.

18. The method of claim 14, wherein the method generates the magic value again at runtime to perform a decryption function without storing the magic value in memory.

19. The method of claim 14, wherein cryptographic operation and magic value is only valid for a period coextensive with a process associated with the cryptographic operation.

20. The method of claim 19, wherein the process is a docker and the magic value is only valid during the period coextensive during operation of the docker.
